# EUROPEAN PATENT SPECIFICATION

(11) **EP 2 321 552 B1**
(45) Date of publication and mention of the grant of the patent: **01.01.2014**
(21) Application number: 09804608.9
(22) Date of filing: 05.08.2009
(51) Int. Cl.: F16G 3/10, F16G 3/08

(54) **METHOD FOR OBTAINING A CLOSED LOOPED BELT FOR THE TRANSPORT OF ARTICLES AND/OR POWERTRANSMISSION STARTING FROM BELT PIECE**
VERFAHREN ZUM ERLANGEN EINES RIEMENKREIS FÜR DEN TRANSPORT VON ARTIKELN UND/ODER FÜR LEISTUNGSÜBETRAGUNGEN AUSGEHEND VON EINEM RIEMENTEIL.
PROCÉDÉ D'OBTENTION D'UNE COURROIE EN BOUCLE FERMÉE À PARTIR D'UNE PIÈCE DE COURROIE POUR LE TRANSPORT D'ARTICLES ET/OU POUR DES TRANSMISSIONS

(30) Priority: 07.08.2008 IT BO20080514
(43) Date of publication of application: 18.05.2011
(73) Proprietor: Vision Tech S.r.l., 40012 Calderara di Reno (Bologna) (IT)
(72) Inventor: VINCENZI, Maurizio, I-41010 Cognento (Modena) (IT); NASCIMBENI, Massimo, I-40012 Calderara di Reno (Bologna) (IT)
(74) Representative: Dall'Olio, Giancarlo
(86) International application number: PCT/IB2009/006468
(87) International publication number: WO 2010/015919

(56) References cited:
- IT-A1- BO20 070 640
- JP-A- 60 084 439
- JP-A- 2003 166 596
- US-A- 2 461 859
- US-A- 4 063 463
- US-A- 5 092 823

## Description

### TECHNICAL FIELD

The present invention relates to the technical field of the belt pieces of the type which can be closed to obtain a loop by means of restraining their relative ends, and which can be employed for the transport of articles and/or for power transmissions; such belt pieces can be comprised of a toothing on a side or they can be smooth on both sides; they can be partially realized in thermoplastic material and/or they can comprise longitudinally extending stiffening cores which are buried therein.

### BACKGROUND ART

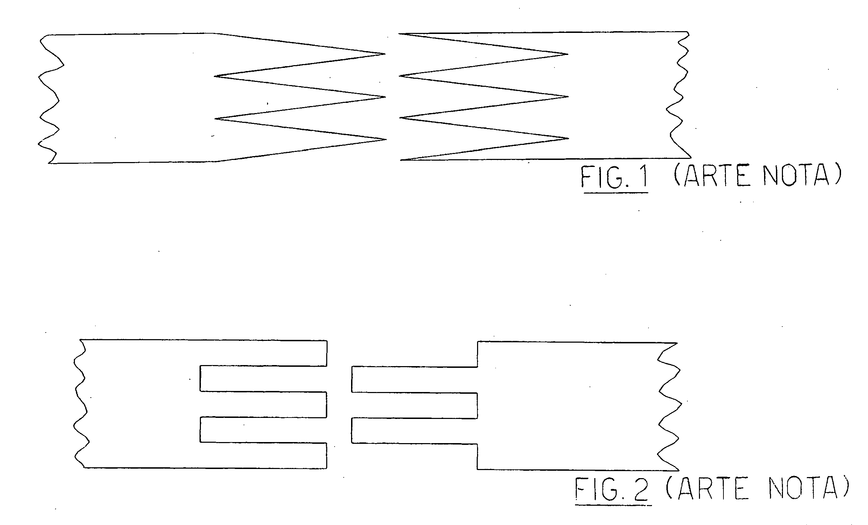

In the above-mentioned field, for example a known method for realizing closed looped toothed belts comprises the steps of: die cutting a piece of a looped toothed belt according to cutting lines such that the relative ends are given complementary coupling profiles, for example comb-shaped or V-shaped; approaching the cut ends according to a longitudinal direction with respect to the belt extension until they are brought in contact with respect to each other and are consequently restrained with respect to each other (see figs. 1, 2); and finally heat sealing the die cut ends.

The above-cited closed looped toothed belts are disadvantageous in that they are little resistant to traction efforts, in particular in the ends coupling region, where the belt is weakened owing to the preceding cutting and heat sealing steps. This disadvantage can be also noticed when belts with stiffening cables, which are buried therein, are employed; these cables, are in fact cut when cutting the looped toothed belt, thus being cut themselves at the coupling region.

Therefore, during the closed looped belt for the transport of articles and/or for power transmissions functioning, the coupling region is the belt section which is likely subjected to breaking.

Document US 5 092 823, which discloses the features mentioned in the preamble of claim 1, concerns an interlocking belt having an elongated female member and an elongated male member extending from its ends. The male and female members extend generally parallel to the lateral edges of the belt and include interlocking complementary dovetail-like projections and notches. A pair of pins extend through the ends of the male and female members for ensuring that the male and female members do not separate as they travel around a pulley. The geometry of the male and female members is such that longitudinal forces extending between the female and male members are borne by the dovetail-like projections and notches and not the pins.

Document US 4 063 463 is concerned with a method of fitting a belt to a filter assembly of the endless belt type having belt-tensioning means in which a belt blank, the end portions of which are at least only partially vulcanized and which have disposed therein recesses arranged to receive in friction locking manner connecting members having an end portion whose configuration corresponds to the configuration of its receiving recess, is placed in position in the assembly around said belt-tensioning means such that the ends of said belt lie adjacent each other, whereafter the connecting members are inserted in respective recesses to form an endless belt having a friction-locked joint, the ends of said belt are fully vulcanized, and the belt is tensioned.

### SUMMARY OF THE INVENTION

An object of the present invention is to provide a method for obtaining a closed looped belt starting from using a belt piece which can be employed for the transport of articles and/or for power transmissions, of the type which can be closed as a loop by means of restraining the relative ends.

Yet another object of the present invention is to provide a method for obtaining a closed looped belt, whose realization costs are relatively low with respect to the objects intended to be pursued.

Said objects are obtained by means of a method for obtaining a closed looped belt starting from said belt piece, as protected in the independent claim 1.

### BRIEF DESCRIPTION OF THE DRAWINGS

The features of the invention, not emerging from the previous description, will be better highlighted in the following, according to what is claimed and with reference to the appended drawings, in which:
figs. 1, 2 are schematic top views of the ends of a belt piece of known type, which ends have V-shaped and comb-shaped profiles respectively, and are intended to be restrained with respect to each other according to an approaching direction, which is parallel to the longitudinal axis of the same belt piece;
fig. 3 shows a perspective view of a toothed belt piece according to a first embodiment of prior art, whose restrainable ends are arranged the one on the other;
fig. 4 shows again the toothed belt piece of fig. 3, after the relative ends are restrained with respect to each other so as to obtain a closed looped toothed belt;
fig. 5 shows a partial and enlarged top view of the closed looped toothed belt of fig. 4, after the restrainable ends (shown in dotted lines) are fixed by thermoplastic melting;
figs. 6, 7 show perspective views of the closed looped toothed belt of fig. 4, after an operating step of a method which is object of the present invention;
fig. 8 is the top view of the closed looped toothed belt of fig. 7;
fig. 9 is the perspective view of the closed looped toothed belt shown in fig. 7, while another operating step of the method according to the invention is carried out;
fig. 10 is the perspective view of the enlarged detail K of fig. 9;
fig. 11 is the top view of the closed looped toothed belt of fig. 9;
figs. 12, 13 show perspective views of the closed looped toothed belt shown in fig. 9, after the other cited operating step of the method according to the invention;
fig. 14 shows the same perspective view as fig. 13, in which the small blocks are shown in dotted lines in order to better show the assembling details;
fig. 15 is the partial top view of a closed looped toothed belt according to the same scale as fig. 5, obtained starting from a toothed belt piece (not shown) having the relative ends with dovetail-shaped profiles, according to a variant of said belt piece.

### DESCRIPTION OF PREFERRED EMBODIMENTS OF THE INVENTION

The following description specifically refers to toothed belt pieces (and closed looped belts obtained starting from these ones) realized in thermoplastic material and in which a plurality of longitudinal stiffening cores is buried similar considerations are intended for any type of belt pieces as well, which can be employed for the transport of articles and/or for power transmissions, as for example "smooth" belt pieces, i.e. pieces not provided with toothing, and/or pieces in which there are no stiffening cores.

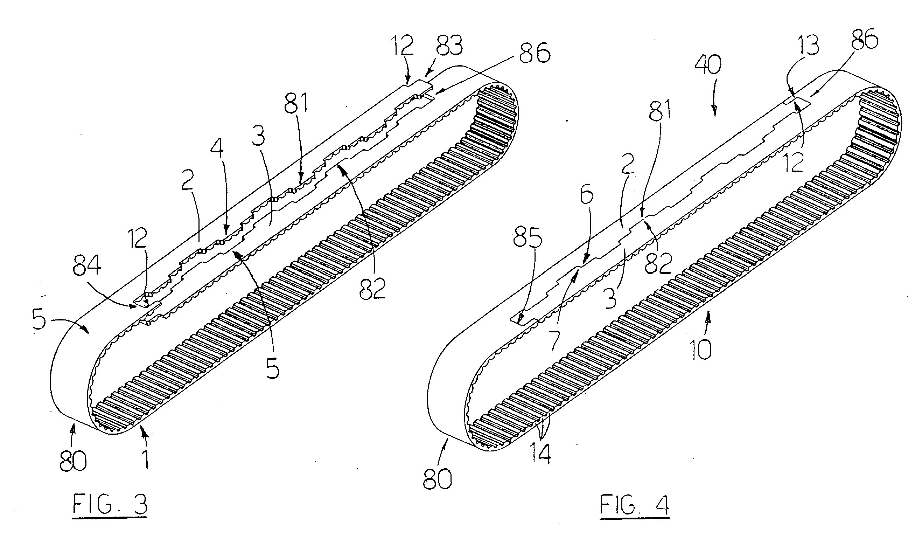

Fig. 3 shows a first embodiment of a toothed belt piece 1, which comprises a central body 80 and a first 2 and a second end 3, which: have transverse dimensions smaller than the transverse dimensions of the central body 80; extend in parallel to the longitudinal axis of the toothed belt piece 1; and have complementary coupling profiles 4, 5 at respective inner longitudinal sides 81, 82 and at transverse sides 83, 84, 85, 86.

The ends 2, 3 of the belt piece 1 shown in fig. 3 are shaped so that their restraining can be realized only according to the direction orthogonal to their extending surface S; such ends 2, 3 are approached but arranged at different heights so that their relative complementary profiles 4, 5 mutually match, if seen in top view (not shown); therefore by lowering for example the first end 2 towards the second end 3, their removable restraining is realized, see fig. 4. As it will be better précised in the following, the thus restrained ends are stable in longitudinal and transverse direction to the extension direction of the looped toothed belt 10, thus obtained.

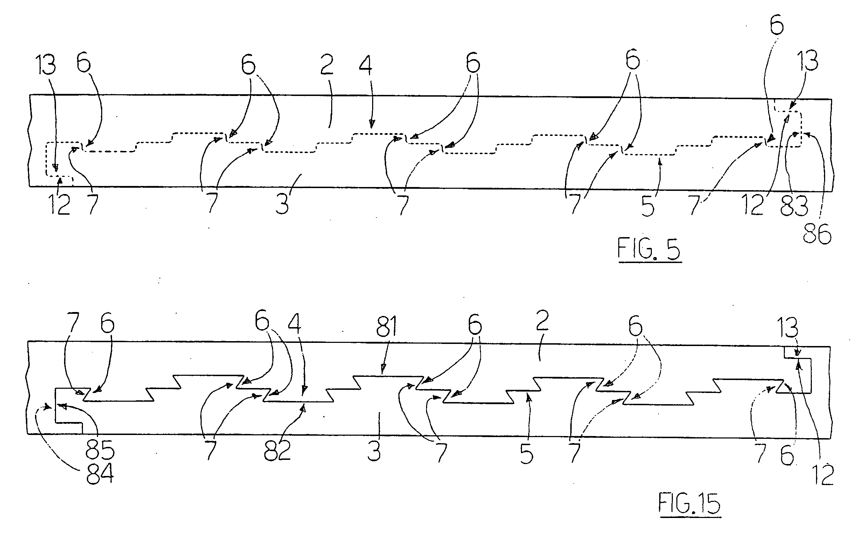

As a way of example, the restrained ends 2, 3 of the closed looped toothed belt 10 can be mutually fixed by means of local melting of respective thermoplastic material, according to techniques known to the experts in the art; therefore fig. 5 shows a portion of the section of the closed looped toothed belt 10 of fig. 4 after fixing by melting the ends 2, 3 (shown by the dotted line in fig. 5).

Yet referring to fig. 4, still prior to the local melting of the thermoplastic material, it is clear how the restrained ends 2, 3 result stable in particular in the direction of the longitudinal extension of the closed looped toothed belt 10 (in the following briefly indicated as "looped belt 10"); in other words, the ends 2, 3 are so shaped that their restraining advantageously opposes a significant resistance to longitudinal traction efforts, which the looped belt 10 can be subjected to during its normal functioning, for the transport of articles and/or for power transmissions.

In greater detail, at the inner longitudinal sides 81, 82 of the ends 2, 3, the complementary profiles 4, 5 comprise a plurality of first 6 and second portions 7, which are respectively arranged in mutual contact when the ends 2, 3 are restrained with respect to each other; and which press the one against the other in case a longitudinal traction effort is applied to the closed looped belt piece 1 (i.e. the looped belt 10). The interaction stabilizing between each couple formed by a first 6 and a second portion 7 contributes singularly to create a total resistant force opposing and compensating the traction effort, thus preventing the ends 2, 3 from sliding in longitudinal direction.

Each couple thus defined can oppose a maximum value of resistant force which depends on the configuration (shape and dimensions) of the contacting surfaces of the corresponding first 6 and second portion 7; these contacting surfaces extend transversely to the longitudinal axis of the looped belt 10. As a consequence, the maximum value of total resistant force the restrained ends 2, 3 can oppose to a traction effort in longitudinal direction depends on the total interaction of the plurality of first 6 and second portions 7.

Depending on the usages the looped belt 10 is intended to, i.e. the traction efforts it is subjected to during its functioning, it is possible to specifically design the configuration and the extension of the coupling ends 2, 3 of the belt piece 1, from which the same looped belt 10 is obtained; by varying the configuration and the longitudinal dimensions of the inner sides 81, 82 of the ends 2, 3 (and so the number of the first 6 and second portions 7, as well as shape and dimensions of the respective contacting surfaces) it is in fact possible to obtain belt pieces 1, which when closed as a loop, have determined features of resistance to the longitudinal traction efforts.

The appended drawings show clearly in this case that the longitudinal extension of the first 2 and second end 3 is a predetermined number of times greater than the transverse dimension of the belt piece 1.

A not shown embodiment of the belt piece 1 can be provided with coupling ends extending on a length greater than the dimensions of a section of the corresponding looped belt 10.

The next fixing of the ends 2, 3 of the looped belt 10 is needed to wrap the belt around pulleys, thus guaranteeing the same ends 2, 3 being stably coupled; moreover, such fixing gives the looped belt 10 more resistance to traction efforts in longitudinal direction.

Referring for example to fig. 5, it can be noticed that the complementary profiles 4, 5 comprise patterns, always equal along the extension of the longitudinal sides 81, 82 of the ends 2, 3; once the shape of the complementary profiles 4, 5 is determined, it is thus clear that the maximum resistance to a traction effort increases with the increase of the extension of the ends 2, 3, as the number of couples of first 6 and second portions 7 of complementary profiles 4, 5 increases and so the total contacting surface on which the traction effort can be "unloaded".

At the transverse sides 83, 84, 85, 86 of the ends 2, 3 instead, the complementary profiles 4, 5 comprise two couples, each formed by a third 12 and a fourth portion 13; said third 12 and fourth portion 13 being arranged in mutual contact respectively, when the ends 2, 3 are restrained with respect to each other and press the one against the other in case a transverse stress is applied on the closed looped belt piece 1 (i.e. looped belt 10). The above-cited considerations referring to the interactions stabilizing between couples of first 6 and second portions 7 are similarly intended, in this case, for the cited third 13 and fourth portions 13.

Specifically referring to the embodiment shown in the figures, it is clear how the above-cited couple is intended to be opposed to a transverse stress acting in a first direction, while the other couple is intended to be opposed to a transverse stress acting in the opposed direction (fig. 5).

Therefore, the looped belt 10 obtained by restraining the two ends 2, 3 of the belt piece 1 opposes a resistance to longitudinal traction/compression efforts, to transverse stresses or to a combination of the first and second ones, i.e. to stresses acting longitudinally and transversely at the same time.

Figure 15 shows a portion of the section of the closed looped toothed belt 10 obtained by restraining the ends 2, 3 of a belt piece according to another embodiment; in this case, the restraining is dovetail-shaped. The same above-cited considerations are intended for such a variant, therefore the same reference numbers are used.

Not shown embodiments of the belt piece 1 can be provided with complementary profiles 4, 5 of the ends 2, 3, which do not comprise the third 12 and fourth portions 13; in such case, the restraining stabilizing between the ends 2, 3 opposes only a resistance to longitudinal traction/compression efforts applied to the closed looped belt 10.

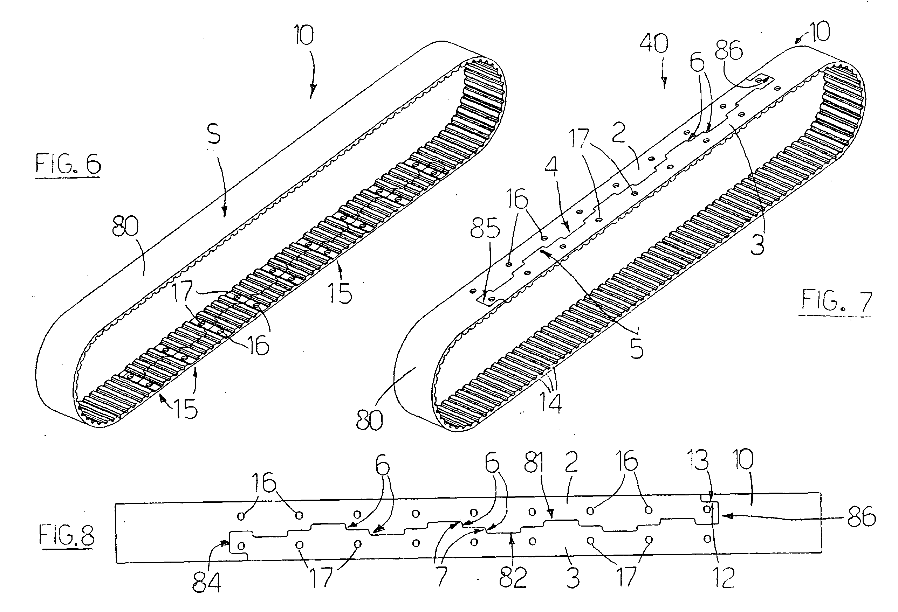

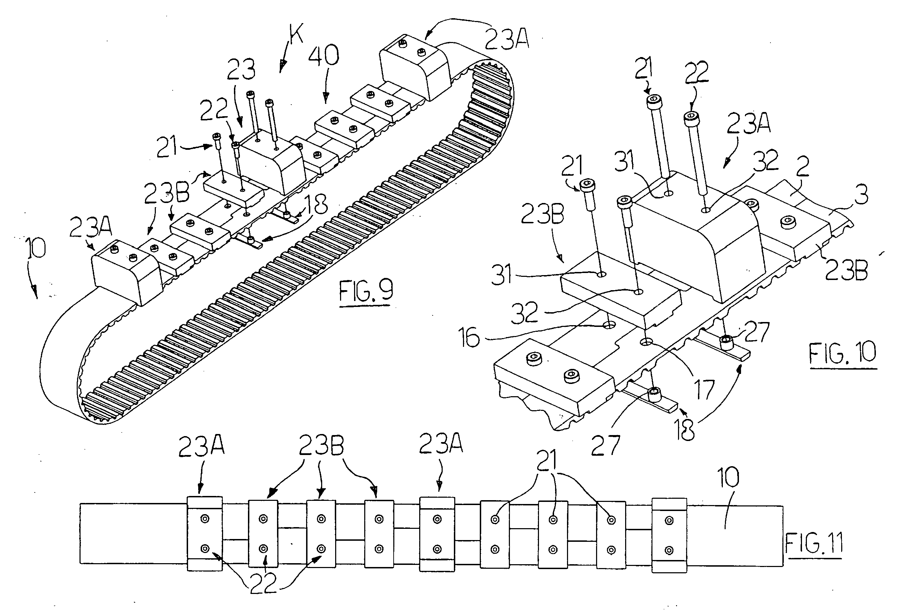

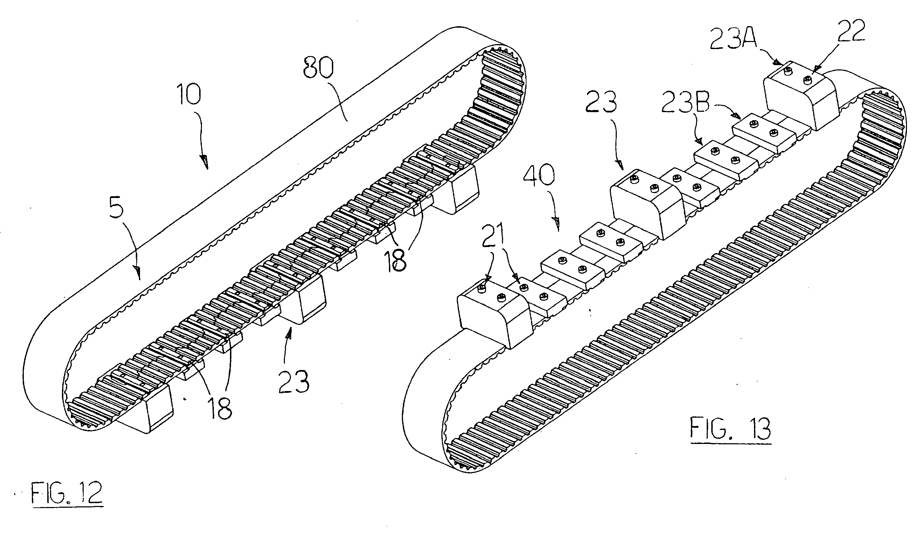

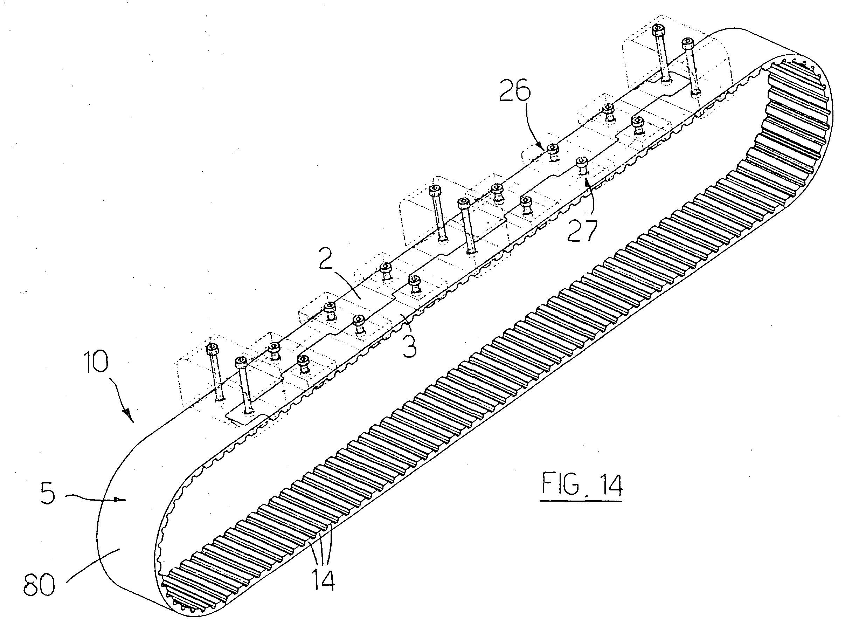

In the following, the steps of a method, which is object of the present invention , for obtaining the closed looped belt 10 starting from using the above-cited belt piece 1, are described. Such method comprises the following operating steps:
- approaching the ends 2, 3 with respect to each other in any direction orthogonal to the longitudinal axis of the belt piece 1 (also according to a transverse direction parallel to the extension surface S of the ends 2, 3), until the ends 2, 3 are restrained; and
- fixing the ends 2, 3 with respect to each other, according to the following steps:
- removing the material of a certain number of teeth 14 of the looped belt 10, which are part of the restraining region 40 of the ends 2, 3, so that corresponding flattenings 15 are provided (fig. 6);
- providing two through holes 16, 17 in predetermined position in each flattening 15, one for each end 2, 3 (figs. 6, 7, 8);
- applying a false tooth 18 at each flattening 15, so that two threaded holes 26, 27 made in the same false tooth 18 result respectively coaxial to the through holes 16, 17 made in the flattening 15 (figs. 9, 10);
- applying a small block 23 at the side of the looped belt 10 opposite to the side in which each flattening 15 is provided, so that two through holes 31, 32 made in the small block 23 result coaxial to the through holes 16, 17 of the made in the small block 23 result coaxial to the through holes 16, 17 of the flattening 15 and to the threaded holes 26, 27 of the corresponding false tooth 18 (figs. 9, 10);
- approaching the ends 2, 3 of the belt piece 1 at different heights such that according to a top view of the ends 2, 3, the respective complementary profiles 4, 5 match with respect to each other;
- approaching one of the ends 2, 3 of the belt piece 1 according to a direction orthogonal to the extension surface S of the same ends 2, 3 until they are restrained with respect to each other, so as to obtain the closed looped belt 10; and
- applying, from the side of the looped belt 10 opposite to the side in which the relative toothing is provided, threaded organs 21, 22 (in the shown example two hexagonal socket cheese-headed screws 21, 22) engaging each small block 23-false tooth 18 unit, in order to removably fix the mutually restrained ends 2, 3 (figs. 9, 10, 11, 12, 13, 14).

As it is known, a false tooth 18 is an element intended to function as a tooth 14 of the looped belt 10, when this one is wrapped around toothed gears.

The assembly of small block 23-false tooth 18 units, applied at the region 40 of the coupled ends 2, 3 of the toothed belt piece 1, determines the removable fixing of the same ends 2, 3; such units stabilize the restraining of the ends 2, 3, in particular in orthogonal direction to the extension surface S of the looped belt 10. This is needed to maintain the ends 2, 3 of the closed looped toothed belt piece 1 in a coupling configuration, when the piece is wrapped around the pulleys.

The resistance to the traction efforts of the looped belt 10 is instead mainly exerted by the ends 2, 3 being restrained, as above-précised, by means of the interaction of the contacting surfaces of the first 6 and second portions of complementary profiles 4, 5.

The assembly of small block 23-false tooth 18 units can be advantageously used also for the transport of articles; as a way of example, fig. 19 shows a looped belt 10 which comprises small blocks 23 of different type. A first type of greater dimensioned small block is indicated with the reference number 23A; it is intended to allow the transport of an article (not indicated) and contributes to the removable fixing of the ends 2, 3 of the looped belt 10. A second type of small block 23B contributes instead only to the removable fixing of the ends 2, 3 of the looped belt 10. Yet referring to applications concerning the transport of articles, it is obviously possible to provide other small blocks of the type indicated with the reference number 23A along the longitudinal extension of the looped belt 10 (solution not shown in the figures), which have only the function of transporting corresponding articles and/or defining receiving seats thereof.

It is intended that small blocks of different type can be used for the removable fixing of the ends 2, 3 of the looped belt 10, as it is however clear to the expert in the art; it is for example possible to make use of solutions not using false teeth or solutions which, instead of the small block, are only provided with large headed screws, which are equally able to guarantee the removable fixing of the ends 2, 3 with respect to each other.

An advantage of the present invention is the realization of a belt piece which can be used for the transport of articles and/or for power transmissions, of the type which can be closed as a loop by means of restraining the respective ends, which belt piece is newly conceived and allows to obtain closed looped belts having improved features of resistance to traction efforts with respect to the known ones. Moreover, the thus obtained belt piece implies realization costs relatively low with respect to the advantages intended to be pursued.

The present invention is advantageous in that it offers a method for obtaining a closed looped belt starting form using a belt piece of the type which can be closed as a loop by means of restraining the respective ends,, which belt can be used for the transport of articles and/or for power transmissions and which has improved features of resistance to traction efforts with respect to the belts of known type. Moreover, the present method implementation implies relatively low costs with respect to the advantages intended to be pursued.

Therefore, the above-described advantages show how the method for obtaining a closed looped belt starting from the same belt piece, object of the present invention, satisfy the prefixed aims and brilliantly solve the drawbacks pertaining to the known solutions.

It is intended that the preceding description is purely exemplary and not limiting, therefore possible practical changes or variations are clearly intended to fall in the protective scope of the invention, as above-described and defined by the following claims.

## Claims

1. Method for obtaining a closed looped belt, usable for the transport of articles and/or for power transmissions, the belt being of the type which can be closed to obtain a loop and which can be used for the transport of articles and/or for power transmissions, comprising a central body (80) and two ends, a first one (2) and a second one (3), which can be connected with respect to each other, wherein said first and second ends (2, 3): extend in parallel to the longitudinal axis of said belt piece (1); have transverse dimensions smaller than the transverse dimensions of the central body (80) of said belt piece (1); and at least at relative longitudinal sides (81, 82) these ends (2, 3) have complementary coupling profiles (4, 5) respectively comprising at least a first and a second portion (6, 7), which contact each other when said ends (2, 3) are restrained with respect to each other and press the one against the other in case a longitudinal traction effort is applied to said belt piece (1), closed as a loop, to prevent the same ends (2, 3) from sliding in longitudinal direction, the method comprising the steps of:
- approaching said ends (2, 3) of said belt piece (1) in a direction comprising at least one component orthogonal to the longitudinal direction of extension of said belt piece (1), until said ends (2, 3) of said belt piece (1) are restrained with respect to each other, so as to obtain a belt (10) closed as a loop;
- and fixing said ends (2, 3) with respect to each other;
the method being **characterized in that** said fixing step of said ends (2, 3) with respect to each other occurs by means of the following steps:
- removing the material of at least a tooth (14) which is part of the region (40) of said restraining of said ends (2, 3) with respect to each other so that it is provided a corresponding flattening (15);
- providing at least two through holes (16, 17) in said flattening (15), one for each said end (2, 3);
- applying a false tooth (18) at said flattening (15), so that two threaded holes (26, 27) made in said false tooth (18) result respectively coaxial to said through holes (16, 17) made in said flattening (15);
- applying, from the side of said belt piece (1) opposite to the side in which the relative toothing is provided, threaded organs (21, 22) engaging said through holes (16, 17) and threaded holes (26, 27) with consequent clamping of said ends (2, 3) with respect to each other.

2. Method according to claim 1, **characterized in that** before said clamping step, it also provides the application of a small block (23) at the side opposite to the side of said belt piece (1) in which said flattening (15) is provided, so that through holes (31, 32) made in said small block (23) result coaxial to said through holes (16, 17) of said flattening (15) and to said threaded holes (26, 27) of said false tooth (18), so as to obtain a clamping of said ends (2, 3), having determined characteristics of stability.

3. Method according to claim 1, **characterized in that** said approaching step of said ends (2, 3) and their subsequent restraining particularly provide:
- approaching said ends (2, 3) of said belt piece (1) at different heights such that according to a plan view of said ends (2, 3) said complementary profiles (4, 5) match with respect to each other, and
- approaching said ends (2, 3) of said belt piece (1) with respect to each other according to a direction orthogonal to the extension surface (S) of the same ends (2, 3) until these latter are restrained with respect to each other, so as to obtain said closed looped belt (10).

4. Method according to claim 1, **characterized in that** said fixing step of said ends (2, 3) with respect to each other occurs by applying at least a small block (23) to the same ends (2, 3).

## Patentansprüche

1. Verfahren zum Erlangen eines Endlosbandes, das für den Transport von Artikeln und/oder für Kraftübertragungenbenutzbar ist, wobei das Band von einem Typ ist, der geschlossen werden kann, um eine Schleife zu erhalten, und der für den Transport von Artikeln und/oder für Kraftübertragungenbenutzt werden kann, umfassend einen Zentralkörper (80) und zwei Enden, ein erstes (2) und ein zweites (3) Ende, die miteinander verbunden werden können, wobei das erste und zweite Ende (2, 3): sich parallel zur Längsachse des Bandstücks (1) erstrecken; eine Querabmessung aufweisen, die kleiner als die Querabmessung des Zentralkörpers (80) des Bandstücks (1) ist; und die Enden (2, 3) wenigstens an relativen Längsseiten (81, 82) komplementäre Koppelungsprofile (4, 5) aufweisen, die jeweils zumindesteinen ersten und einen zweiten Abschnitt (6, 7) umfassen, die einander berühren, wenn die Enden (2, 3) miteinander in Eingriff stehen, und gegeneinander drücken, wenn eine Längszugkraft auf das zur Schleife geschlossene Bandstück (1) angewandt wird, um zu verhindern, dass die Enden (2, 3) in Längsrichtung verrutschen, wobei das Verfahren die folgenden Schritte umfasst:
- Annähern der Enden (2, 3) des Bandstücks (1) in einer Richtung, die wenigstens eine Komponente orthogonal zur Längsrichtung der Erstreckung des Bandstücks (1) umfasst, bis die Enden (2, 3) des Bandstücks (1) miteinander in Eingriff stehen, um ein zur Schleife geschlossenes Endlosband (10) zu erhalten;
- und Befestigen der Enden (2, 3) aneinander;
wobei das Verfahren **dadurch gekennzeichnet ist, dass** der Schritt des Befestigens der Enden (2, 3) aneinander mittels der folgenden Schritte erfolgt:
- Entfernen des Materials von wenigstens einem Zahn (14), der Teil des Bereichs (40) des gegenseitigen Ineinandergreifens der Enden (2, 3) ist, so dass eine entsprechende Abflachung (15) bereitgestellt wird;
- Anfertigenvon wenigstens zwei Durchgangslöchern (16, 17) in der Abflachung (15), eines für jedes Ende (2, 3);
- Anbringen eines falschen Zahns (18) an der Abflachung (15), derart, dass zwei Gewindelöcher (26, 27), die in dem falschen Zahn (18) ausgebildet sind, jeweils koaxial zu den Durchgangslöchern (16, 17) angeordnet werden, die in der Abflachung (15) ausgebildet sind;
- Anbringen,von der Seite des Bandstücks (1) gegenüber der Seite, auf der die relative Verzahnung bereitgestellt ist, von Gewindeorganen (21, 22), die in die Durchgangslöcher (16, 17) und Gewindelöcher (26, 27) eingreifen, wodurch die Enden (2, 3) fest miteinander verspannt werden.

2. Verfahren nach Anspruch 1, **dadurch gekennzeichnet, dass** vor dem Schritt des Miteinanderverspannens das Anbringeneines kleinen Blocks (23) auf der Seite gegenüber der Seite des Bandstücks (1) vorgesehen ist, auf der die Abflachung (15) vorgesehen ist, derart, dass Durchgangslöcher (31, 32), die in dem kleinen Block (23) ausgebildet sind, koaxial zu den Durchgangslöchern (16, 17) der Abflachung (15) und zu den Gewindelöchern (26, 27) des falschen Zahns (18) angeordnet werden, um ein Miteinanderverspannen der Enden (2, 3) mit bestimmten Stabilitätseigenschaften zu erreichen.

3. Verfahren nach Anspruch 1, **dadurch gekennzeichnet, dass** der Schritt des Annäherns der Enden (2, 3) und desanschließenden In ein andergreifensins besondere Folgendes vorsieht:
- Annähern der Enden (2, 3) des Bandstücks (1) auf unterschiedlichen Höhen, derart, dass gemäß einer Draufsicht auf die Enden (2, 3) die komplementären Profile (4, 5) miteinander übereinstimmen, und
- Annähern der Enden (2, 3) des Bandstücks (1) in Bezug aufeinander gemäß einer Richtung orthogonal zur Erstreckungsfläche (S) der Enden (2, 3), bis diese so ineinander eingreifen, dass das zur Schleife geschlossene Endlosband (10) erhalten wird.

4. Verfahren nach Anspruch 1, **dadurch gekennzeichnet, dass** der Schritt des Befestigens der Enden (2, 3) aneinander durch Anbringenzumindest eines kleinen Blocks (23) an den Enden (2, 3) erfolgt.

## Revendications

1. Un procédé d'obtention d'une courroie en boucle fermée, pouvant être utilisée pour le transport d'articles et/ou pour des transmissions de puissance, la courroie étant du type qui peut être fermée pour obtenir une boucle et qui peut être utilisée pour le transport d'articles et/ou pour des transmissions de puissance, comprenant un corps central (80) et deux extrémités, soit une première extrémité (2) et une deuxième extrémité (3), qui peuvent être accouplées l'une avec l'autre, où lesdites première et deuxième extrémités (2, 3) : se développent parallèlement à l'axe longitudinal de ladite pièce de courroie (1) ; ont des dimensions transversales inférieures aux dimensions transversales du corps central (80) de ladite pièce de courroie (1) ; et, au moins au niveau de côtés longitudinaux (81, 82) respectifs, ces extrémités (2, 3) ont des profils d'accouplement complémentaires (4, 5) comprenant respectivement au moins une première et une deuxième portions (6, 7) qui sont en contact mutuel quand lesdites extrémités (2, 3) sont encastrées entre elles et appuient l'une contre l'autre dans le cas d'un effort de traction longitudinal appliqué à ladite pièce de courroie (1), fermée en boucle, pour empêcher ces mêmes extrémités (2, 3) de glisser en direction longitudinale, le procédé comprenant les phases consistant à :
- approcher lesdites extrémités (2, 3) de ladite pièce de courroie (1) dans une direction comprenant au moins une composante orthogonale à la direction d'extension longitudinale de ladite pièce de courroie (1), jusqu'à ce que lesdites extrémités (2, 3) de ladite pièce de courroie (1) soient encastrées entre elles, de manière à obtenir une courroie (10) fermée en boucle ;
- et fixer lesdites extrémités (2, 3) entre elles ;
le procédé étant **caractérisé en ce que** ladite phase de fixation desdites extrémités (2, 3) entre elles a lieu par le biais des phases suivantes :
- supprimer le matériau d'au moins une dent (14) faisant partie de la zone (40) dudit encastrement réciproque desdites extrémités (2, 3) de manière à définir un aplatissement (15) correspondant ;
- réaliser au moins deux trous débouchants (16, 17) dans ledit aplatissement (15), un pour chacune desdites extrémités (2, 3) ;
- appliquer une fausse dent (18) audit aplatissement (15), de manière à ce que deux trous filetés (26, 27) réalisés dans ladite fausse dent (18) soient respectivement coaxiaux auxdits trous débouchants (16, 17) réalisés dans ledit aplatissement (15) ;
- appliquer, du côté de ladite pièce de courroie (1) opposé au côté dans lequel est prévue la denture correspondante, des organes filetés (21, 22) qui viennent en prise dans lesdits trous débouchants (16, 17) et trous filetés (26, 27) avec serrage conséquent desdites extrémités (2, 3) l'une avec l'autre.

2. Le procédé selon la revendication 1, **caractérisé en ce que**, avant ladite phase de serrage, il prévoit aussi l'application d'un petit bloc (23) du côté opposé au côté de ladite pièce de courroie (1) où est réalisé ledit aplatissement (15), de manière à ce que des trous débouchants (31, 32) réalisés dans ledit petit bloc (23) soient coaxiaux auxdits trous débouchants (16, 17) dudit aplatissement (15) et auxdits trous filetés (26, 27) de ladite fausse dent (18), afin d'obtenir un serrage desdites extrémités (2, 3) ayant des caractéristiques déterminées de stabilité.

3. Le procédé selon la revendication 1, **caractérisé en ce que** ladite phase d'approche desdites extrémités (2, 3) et leur encastrement subséquent prévoient en particulier :
- approcher lesdites extrémités (2, 3) de ladite pièce de courroie (1) à des hauteurs différentes de manière à ce que, selon une vue en plan desdites extrémités (2, 3), lesdits profils complémentaires (4, 5) correspondent entre eux, et
- approcher l'une de l'autre lesdites extrémités (2, 3) de ladite pièce de courroie (1) selon une direction orthogonale à la surface d'extension (S) de ces mêmes extrémités (2, 3) jusqu'à ce que ces dernières soient encastrées entre elles, de manière à obtenir ladite courroie en boucle fermée (10).

4. Le procédé selon la revendication 1, **caractérisé en ce que** ladite phase de fixation desdites extrémités (2, 3) entre elles a lieu en appliquant au moins un petit bloc (23) à ces mêmes extrémités (2, 3).
